# EUROPEAN PATENT APPLICATION

(11) **EP 1 959 383 A1**
(43) Date of publication of application: **20.08.2008**
(21) Application number: 08151329.3
(22) Date of filing: 12.02.2008
(51) Int. Cl.: G06Q 30/00

(54) **System and method for disseminating advertisements by presence information**

(30) Priority: 15.02.2007 CN 200710079850; 21.11.2007 WO PCT/CN2007/071102
(71) Applicant: Huawei Technologies Co., Ltd., Longgang District Shenzhen, Guangdong Province, 518129 (CN)
(72) Inventor: Gu, Chong, Guangdong Province Shenzhen 518129 (CN); Zhao, Yang, Guangdong Province Shenzhen 518129 (CN); Hu, Hanqiang, Guangdong Province Shenzhen 518129 (CN)
(74) Representative: Viering, Jentschura & Partner

(57) **Abstract**

The present invention discloses a method, a system, and an advertisement server for disseminating advertisements by means of presence information, so as to solve the problem that the advertisement dissemination by means of a presence system can not be recorded effectively in the prior art. The method disclosed in the present invention comprises: subscribing to, by the watcher, the presence information of the presentity; publishing, by the presentity, the presence information with advertisement information and presentity ID to the presence server; notifying, by the presence server, the watcher of the presence information with presentity ID; sending, by the watcher, the presentity ID to the advertisement server; and, recording, by the advertisement server, the presentity ID. Because the advertisement server records the presentity ID, it knows how the watcher obtains the advertisement, and thereby can record the advertisement dissemination effectively.

## Description

This application claims priority from Chinese Patent Application No. 200710079850.5, filed on February 15, 2007, entitled "Method, System, and Server for Disseminating Advertisements by Presence Information", the content of which is incorporated herein by reference in its entirety.

### Field of the Invention

The present invention relates to communication field, particularly to presence information communication service field.

### Background of the Invention

The presence service is a communication service for collecting and publishing presence information. Many users expect to obtain other's presence information from the presence service, such as users' family members and friends.

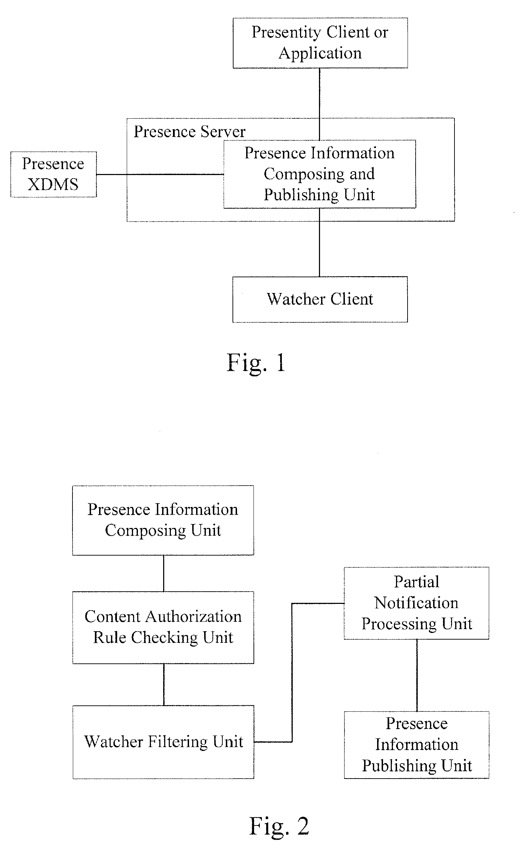

In the technical solution of an existing presence information system, as shown in Figure 1, a presence information system mainly consists of a presentity client or application, a presence server, a watcher client, a presence Extensible Markup Language (XML) Document Management System (presence XDMS).

The presentity client or application is a source of presence information, which may publish the presence information to a presence server actively when its presence information changes. After the published presence information is processed (including composed, authorized and filted, etc.), the presence server notifies the processed presence information to all watcher clients that have subscribed to this user presence information.

The presence server is adapted to receive a Subscribe message from a watcher client, determine the subscription result according to filtering rules preset by the subscribed presentity, receive the presence information published by the presentity, process the presence information with some filtering rules (content authorization, filtering,) preset by the presentity/watcher, and finally publish the presence information to a watcher client via Notify message.

The watcher client subscribes to the presence information of the presentity and receives the presence information of the presentity published by the presence server.

The presence XDMS stores authorization rules and group information of presentity, the authorization rules include subscription authorization rules, content authorization rules, etc.

It should be noted that the presence information is subscribed to and published via SIP (Session Initiation Protocol) messages. The SIP message header of the published information contains a component flag of the presentity, and the message body contains an XML (Extensible Markup Language) document, which is the presence information of the presentity.

In the existing system, one of the most important means is a "presence information composing and publishing unit". The structure of the presence information composing and publishing unit is shown in Figure 2, including:

a presence information composing unit, adapted to compose newly published presence information and presence information stored in the server;

a content authorization rule checking unit, adapted to filter out the presence information that is not permitted to be published according to the rules (what presence information is permitted to be published) set by the presentity;

a watcher filtering unit, adapted to filter out the information that is not expected to be received (for example, the watcher only wants to receive a notification when the user terminal changes from OFF state to ON state, and other presence information will be filtered out), according to the filtering rules (what information is not expected to be received) set by the watcher;

a partial notification processing unit, adapted to filter out the information beyond the subscription scope, according to the filtering rules set by the watcher when the watcher performs subscription (for example, only the presence information relevant to the user's location will be received);

a presence information publishing unit, adapted to notify the watcher of the presence information that has been processed.

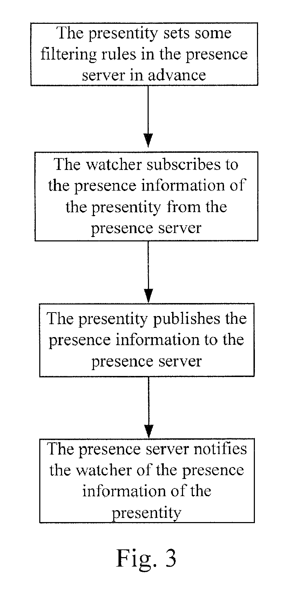

The processing procedure of the existing presence system is shown in Figure 3, including the following steps.

The presentity sets some filtering rules (such as subscription authorization rules and content authorization rules) in the presence server in advance.

The watcher subscribes to the presence information of the presentity from the presence server.

The presentity publishes the presence information to the presence server.

The presence server notifies the watcher of the presence information of the presentity.

There are many ways to disseminate mobile advertisements today. In the process of implementing the present invention, the inventor found, via studying, that the related art only supports publishing advertisements by presence information but can not record the dissemination of advertisements effectively. As a result, the advertisement server can not know how the user obtained the advertisement. However, such information is important metrical information for dissemination of advertisements. In addition, in the related art, the advertisement server can not set an effective strategy for distribution of advertisements and disseminate advertisements according to the presence information of the presentity client

### Summary of the Invention

An embodiment of the present invention provides a method and a system for disseminating advertisements by presence information, which can utilize a presence system to record dissemination of advertisements effectively.

The present invention provides a method for disseminating advertisements by means of presence information, including the following steps:

subscribing to, by a watcher, the presence information of a presentity;

publishing, by the presentity, the presence information with advertisement information and a presentity ID to a presence server;

notifying, by the presence server, the watcher of the presence information with the presentity ID; and

sending, by the watcher, the presentity ID to an advertisement server; recording, by the advertisement server, the presentity ID.

In addition, an embodiment of the present invention further provides a system for disseminating advertisements by means of presence information, including:

a first subscribing unit, which is arranged in a watcher, adapted to enable the watcher to subscribe to the presence information of a presentity;

a publishing unit, which is arranged in the presentity, adapted to enable the presentity to publish the presence information with advertisement information and a presentity ID to a presence server;

a notifying unit, which is arranged in the presence server, adapted to enable the presence server to notify the watcher of the presence information with the presentity ID;

a sending unit, which is arranged in the watcher, adapted to enable the watcher to send the presentity ID to an advertisement server; and

a recording unit, which is arranged in the advertisement server, adapted to record the presentity ID sent from the watcher to the advertisement server.

It can be seen from above technical solutions that, during advertisement dissemination, the advertisement server records the presentity ID or the advertisement server matches the presentity ID sent from the watcher client to the presentity ID notified by the presence server and records the result of matching, thereby, the advertisement server is able to know how the watcher client obtained the advertisement; in addition, the advertisement server may obtain the presence information of the presentity client. Therefore the advertisement server may set effective advertisement sending strategy and disseminate advertisements.

### Brief Description of the Drawings

Figure 1 is a schematic diagram illustrating the structure of a presence system in the related art;

Figure 2 is a detailed schematic diagram of the presence information composing and publishing unit in the related art;

Figure 3 is an interaction flow diagram of the presence system in the related art;

Figure 4 is a flow diagram of a method in the first embodiment;

Figure 5 is a flow diagram of a method in the second embodiment;

Figure 6 is a flow diagram of a method in the third embodiment;

Figure 7 is a flow diagram of a method in the fourth embodiment;

Figure 8 is a schematic diagram illustrating the structure of the fifth embodiment;

Figure 9 is a schematic diagram illustrating the structure of the sixth embodiment;

Figure 10 is a schematic diagram illustrating the structure of the seventh embodiment; and

Figure 11 is a schematic diagram illustrating the structure of the eighth embodiment.

### Detailed Description of the Embodiments

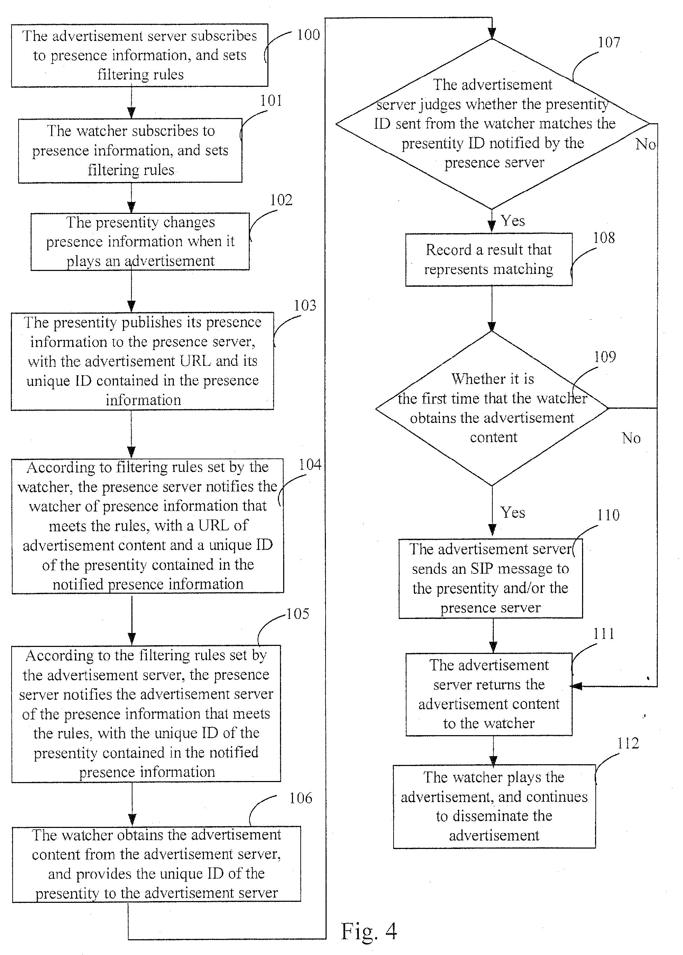

A method for disseminating advertisements by presence information is provided in the first embodiment of the present invention. The procedure of the method in the first embodiment is shown in Figure 4, including the following steps.

Step 100: An advertisement server subscribes to presence information of a presentity and sets filtering rules.

Step 101: A watcher subscribes to the presence information of the presentity and sets filtering rules which include information of advertisement type, such as sports advertisements, culture and art advertisements.

Step 102: When playing an advertisement, the presentity can recognize that the content belongs to advertisement according to the format of the content, and change the presence information while the advertisement is played.

Step 103: The presentity publishes to a presence server the presence information together with a URL of the advertisement content and a unique presentity ID that is distinguished from those of other presentities.

Step 104: According to the filtering rules set by the watcher, the presence server notifies the watcher of the presence information that meets the rules, with a URL of advertisement content and a unique ID of the presentity contained in the notified presence information.

Step 105: According to the filtering rules set by the advertisement server, the presence server notifies the advertisement server of the presence information that meets the rules, with the unique ID of the presentity contained in the notified presence information; of course, to ensure the presence information can be identified more accurately in subsequent steps, the URL of advertisement content may also be included in the presence information. When determining that the request initiated from the watcher is a subscription refreshing request, the presence server will no longer notify the advertisement server of the presence information.

Step 106: The watcher obtains the URL of advertisement content from the notified presence information and obtains the advertisement content via the URL from the advertisement server, carrying the unique ID; in that way, the advertisement server knows how the watcher obtains the advertisement and records the presentity ID.

Step 107: The advertisement server judges whether the presentity ID sent from the watcher matches the presentity ID notified by the presence server; if the two IDs are identical, step 108 will be processed; otherwise step 111 will be processed.

Step 108: The advertisement server records a result that represents matching.

Step 109: The advertisement server judges whether it is the first time that the watcher obtains the advertisement content; if it is, the advertisement server deems that the presentity has disseminated the advertisement content successfully and executes step 110; otherwise the advertisement server executes step 111 directly.

Step 110: The advertisement server sends an SIP message to the presentity to notify the presentity that the advertisement has been disseminated successfully; or, the advertisement server sends the SIP message to the presence server to notify the presence server that the presentity has disseminated the advertisement successfully and that the disseminating object is the watcher; of course, the advertisement server may send the SIP message to both the presentity and the presence server.

Step 111: The advertisement server returns the advertisement content to the watcher.

Step 112: The watcher plays the advertisement and continues to disseminate advertisement.

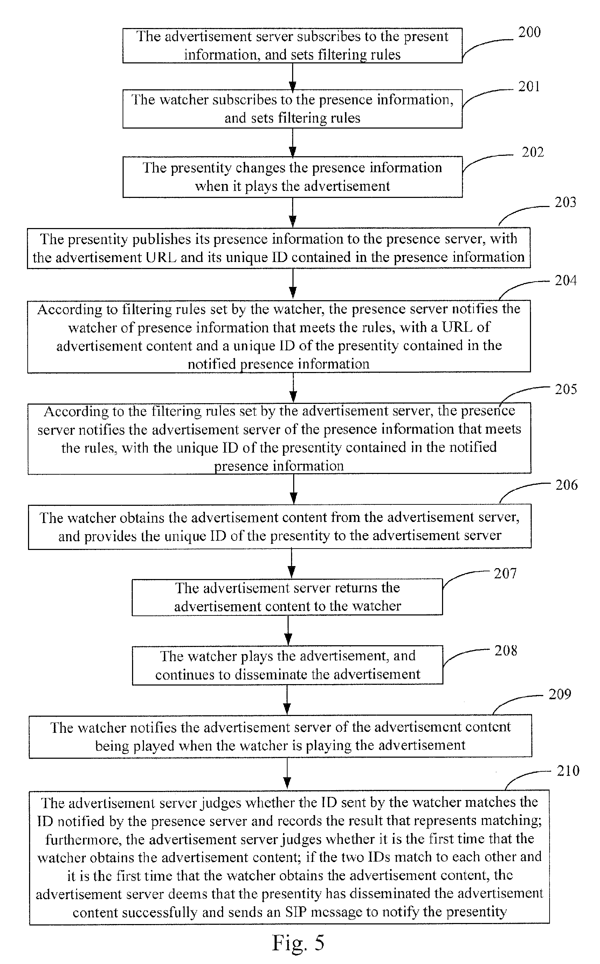

A method for disseminating advertisements by means of presence information is provided in the second embodiment of the present invention. Different from the first embodiment, in the second embodiment, only after the watcher plays the advertisement and feeds back the information indicating that the advertisement has been played to the advertisement server, the advertisement server judges whether the presentity has disseminated an advertisement successfully. The procedure of the second embodiment is shown in Figure 5, in which the preceding steps 200-206 are identical to the steps 100-106 in the first embodiment, but the method further includes:

Step 207: The advertisement server returns the advertisement content to the watcher.

Step 208: The watcher plays the advertisement and continues to disseminate advertisement.

Step 209: When playing the advertisement, the watcher notifies the advertisement server of the advertisement content that is being played.

Step 210: The advertisement server judges whether the ID sent by the watcher matches the ID notified by the presence server and records the result that represents matching; furthermore, the advertisement server judges whether it is the first time that the watcher obtains the advertisement content; if the two IDs match to each other and it is the first time that the watcher obtains the advertisement content, the advertisement server deems that the presentity has disseminated the advertisement content successfully and sends an SIP message to notify the presentity and/or the presence server.

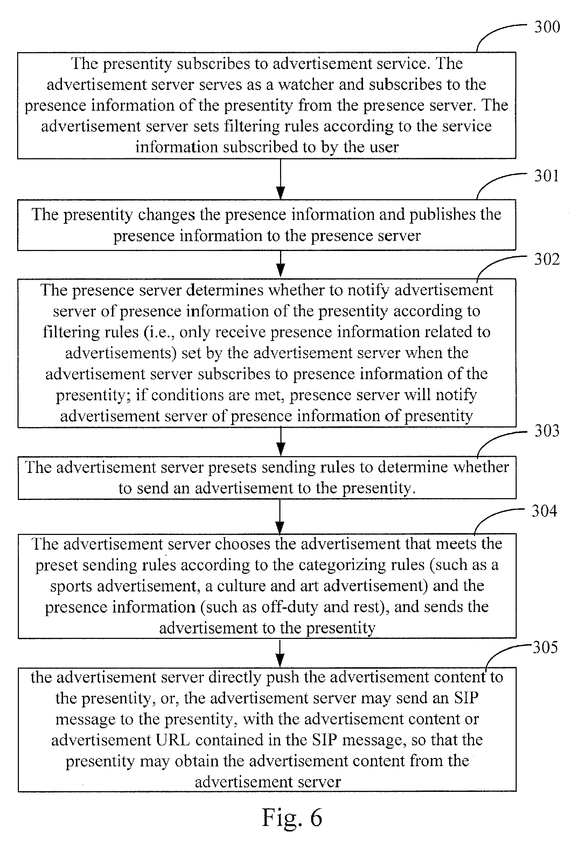

A method for disseminating advertisements by means of presence information is provided in the third embodiment of the present invention. The procedure of the third embodiment is shown in Figure 6, including the following steps.

Step 300: The presentity subscribes to advertisement service. The advertisement server serves as a watcher and subscribes to the presence information of the presentity from the presence server. The advertisement server sets filtering rules (e.g., only receive presence information related to advertisements) according to the service information subscribed to by the user.

Step 301: The presentity changes the presence information and publishes the presence information to the presence server.

Step 302: The presence server determines whether to notify the advertisement server of the presence information of the presentity according to the filtering rules (i.e., only receive presence information related to advertisements) set by the advertisement server when the advertisement server subscribes to the presence information of the presentity; if the conditions are met, the presence server will notify the advertisement server of the presence information of the presentity.

Step 303: The advertisement server presets sending rules to determine whether to send an advertisement. For example, the advertisement server determines to send an advertisement to the presentity if the sending frequency does not exceed a preset limit and the presentity is in disengagement time.

Step 304: When determining it is appropriate to send an advertisement, the advertisement server will choose the advertisement that meets the preset sending rules according to the categorizing rules (such as a sports advertisement, a culture and art advertisement) and the presence information (such as off-duty and rest), and send the advertisement to the presentity. For example, the advertisement server accesses a shared XDMS to obtain user profile and user preference of the presentity, and then chooses an appropriate advertisement to send to the presentity according to the user profile, user preference, and history advertisement sending record.

Step 305: The advertisement server directly pushes the advertisement content to the presentity, or, the advertisement server may send an SIP message to the presentity, with the advertisement content or advertisement URL contained in the SIP message, so that the presentity may obtain the advertisement content from the advertisement server.

When the presentity plays the advertisements subsequently, the corresponding steps in the first embodiment or the second embodiment can be executed.

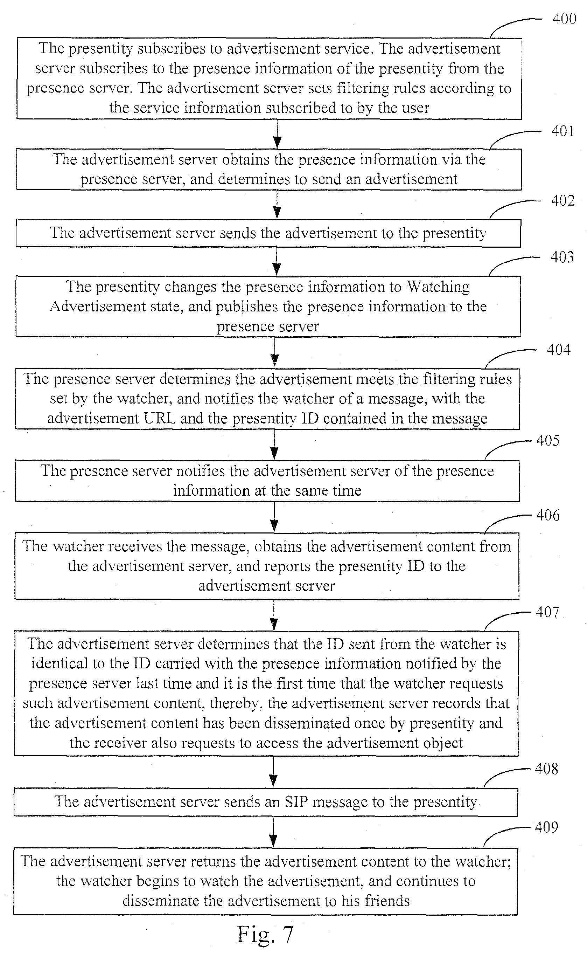

A method for disseminating advertisements by means of presence information is provided in the fourth embodiment of the present invention. The procedure of the fourth embodiment is shown in Figure 7.

Suppose that user John and user Ken work in the same company and have a common interest in sports. Ad-Anywhere is an advertisement company which inserts advertisements in different services as demanded by the users and provides payment accordingly. The company has entered into an agreement with Operator C to provide preferential service to the users on the basis of the amount of advertisements watched or disseminated by the users, for example, the company provides other free services to the users, such as weather forecast service or reimbursement of charge. Both John and Ken have subscribed to the advertisement service of Ad-Anywhere and have customized their expected advertisement contents, which may be advertisements on sports products or sports events.

Step 400: Now, Ad-Anywhere has developed a new service, which utilizes presence information to disseminate advertisements. The company subscribes to the presence information of John and Ken from the presence server, and filters out presence information that is not suitable for disseminating advertisements or irrelevant to advertisements. Ken has also subscribed to the presence information of John.

Step 401: John is strolling along the street on the weekend, and his presence information is "Strolling Along The Street". The advertisement server of Ad-Anywhere obtains the information via the presence server and knows that John can receive advertisements in that state, and, furthermore, Ad-Anywhere finds that John agreed to receive up to 3 advertisements per day, but no advertisement has been sent to John today. Then, Ad-Anywhere determines to send an advertisement to John.

Step 402: The advertisement server obtains the user profile and user preference of John from the shared XDMS and finds the newly created NIKE New Product advertisement is very suitable for John; then, the advertisement server sends the advertisement address http://www.ad-anywhere.com/content/nike20070105.rm in an SIP message to John.

Step 403: John obtains the advertisement and begins to play the advertisement; John's client identifies that the content is advertisement by the format, and therefore notifies PUA (Presence User Agent) to change the presence information to "Watching Advertisement" state, and publishes the presence information to the presence server. The message format is:
Publish sip:presentity@example.com SIP/2.0
Via: SIP/2.0/UDP pua.example.com;branch=z9hG4bK652hsge
To: <sip:presentity@example.com>
From: <sip:presentity@example.com>;tag=1234wxyz
Call-ID: 81818181@pua.example.com
CSeq: 1 Publish
Max-Forwards: 70
Expires: 3600
Event: presence
Content-Type: application/pidf+xml
Content-Length: ...

```
 <?xml version=" 1.0" encoding="UTF-8"?>
 <presence xmlns="urn:ietf:params:xml:ns:pidf'
     xmlns:op="urn:oma:xml:prs:pidf:oma-pres"
     entity="sip:someone@example.com">
     <pdm:person id="a1233">
       <activities>
              <ad URL="http://www.ad-anywhere.com/content/nike20070105.rm"/>
       <activities>
       <pdm:timestamp>2005-02-23T12:14:56Z</pdm:timestamp>
    </pdm:person>
 </presence>
```

Step 404: The presence server judges whether the advertisement meets the filtering rules preset by Ken. The presence server detects from the presence information that the advertisement belongs to an advertisement of sports products, which matches the filtering rule "only sports advertisement" set by Ken completely; therefore, the presence server notifies Ken of the presence information with the URL and John's ID. The message format is:
Notify sip:user@watcherhost.example.com SIP/2.0
Via: SIP/2.0/TCP server.example.com;branch=z9hG4bKna998sk
From: <sip:presentity@example.com>;tag=ffd2
To: <sip:user@example.com>;tag=xfg9
Call-ID: 2010@watcherhost.example.com
Event: presence
Subscription-State: active;expires=599
Max-Forwards: 70
CSeq: 8775 Notify
Contact: sip:server.exainple.com
Content-Type: application/pidf+xml
Content-Length: ...

```
 <?xml version=" 1.0" encoding="UTF-8"?>
 <presence xmlns="urn:ietf:params:xml:ns:pidf"
     xmlns:op="urn:oma:xml:prs:pidf:oma-pres"
     entity="sipaomeone@example.com">
     <pdm:person id="a1233">
       <activities>
              <ad URL="http://www.ad-anywhere.com/content/nike20070105.rm"/>
       <activities>
       <pdmaimestamp>2005-02-23T12:14:56Z</pdmaimestamp>
    </pdm:person>
 </presence>
```

Step 405: When notifying Ken of the presence information, the presence server finds that the presence information contains an advertisement identification that indicates the presence information belongs to advertisement, and thereby notifies the advertisement server of the presence information at the same time.

Step 406: Ken receives the presence information, obtains the advertisement content from the advertisement server, and reports John's ID to the advertisement server.

Step 407: The advertisement server receives the request from Ken, and determines that the ID in the request is identical to the ID carried with the presence information notified by the presence server last time and it is the first time that Ken requests such advertisement content, thereby, the advertisement server records that the advertisement content has been disseminated once by John and the receiver also requests to access the advertisement object.

Step 408: The advertisement server sends an SIP message to John to tell John that the advertisement disseminated to Ken has positive effect; in addition, the reward information for John may be included in the SIP message.

Step 409: The advertisement server returns the content to Ken; Ken begins to watch the advertisement and further disseminates the advertisement to his friends.

An alternative process is as follows.

When watching the advertisement, Ken sends an SIP message to the advertisement server to notify the advertisement server that he is watching the advertisement and the advertisement content identifier.

The advertisement server detects that the advertisement content was disseminated from John to Ken, and then notifies John that the advertisement disseminated by him has been watched by Ken.

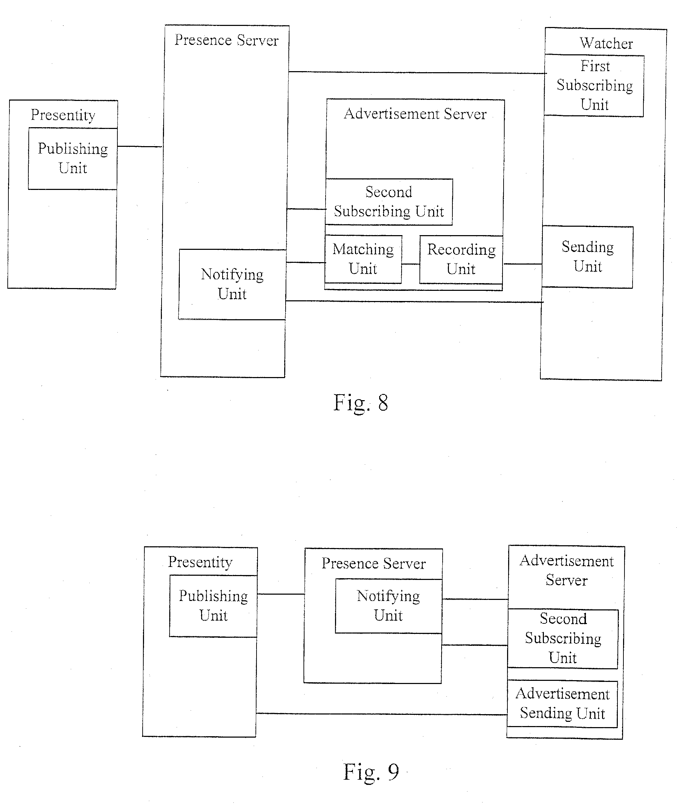

A system for disseminating advertisements by means of presence information is provided in the fifth embodiment of the present invention. The structure of the system is shown in Figure 8, and the system includes:

a first subscribing unit, which is arranged in a watcher, adapted to enable the watcher to subscribe to the presence information of a presentity;

a publishing unit, which is arranged in the presentity, adapted to enable the presentity to publish the presence information with advertisement information and a presentity ID to a presence server;

a notifying unit, which is arranged in the presence server, adapted to enable the presence server to notify the watcher of the presence information with the presentity ID;

a sending unit, which is arranged in the watcher, adapted to enable the watcher to send the presentity ID to an advertisement server; and

a recording unit, which is arranged in the advertisement server, adapted to record the presentity ID sent from the watcher to the advertisement server.

The system further includes:

a second subscribing unit, which is arranged in an advertisement server, adapted to enable the advertisement server to subscribe to the presence information of the presentity;

the notifying unit, further adapted to enable the presence server to notify the advertisement server of the presence information with the presentity ID; and

a matching unit, which is arranged in the advertisement server, adapted to enable the advertisement server to match a presentity ID sent from the watcher to a presentity ID notified by the presence server, and record a result.

The system further includes:

a playback unit, which is arranged in the watcher, adapted to play the advertisement content after the advertisement server matches the presentity ID sent from the watcher to the presentity ID notified by the presence server and records the result.

The system further includes:

a playback notifying unit, which is arranged in the watcher, adapted to play the advertisement content and notify the advertisement server of a message to indicate that the watcher has played the advertisement, between the step in which the watcher sends the presentity ID to the advertisement server and the advertisement server records the presentity ID and the step in which the advertisement server matches the presentity ID sent from the watcher to the presentity ID notified by the presence server and records the result.

The system further includes:

a feedback message sending unit, which is arranged in the advertisement server, adapted to enable the advertisement server to send a feedback message to the presentity and/or the presence server.

The system further includes:

an advertisement sending unit, which is arranged in the advertisement server, adapted to enable the advertisement server to choose the advertisement that meets preset sending rules according to categorizing rules and the presence information and send the advertisement to the presentity;

the publishing unit, further adapted to enable the presentity to publish presence information to the presence server; and

the notifying unit, further adapted to enable the presence server to notify the advertisement server of the presence information that meets filtering rules preset by the advertisement server.

A system for disseminating advertisements by means of presence information is provided in the embodiment 6 of the present invention. The structure of the system is shown in Figure 9, and the system includes:

a second subscribing unit, which is arranged in an advertisement server, adapted to enable the advertisement server to subscribe to the presence information of a presentity;

an advertisement sending unit, which is arranged in the advertisement server, adapted to enable the advertisement server to choose the advertisement that meets preset sending rules according to categorizing rules and the presence information and send the advertisement to the presentity;

a publishing unit, which is arranged in the presentity, adapted to enable the presentity to publish the presence information to a presence server; and

a notifying unit, which is arranged in the presence server, adapted to enable the presence server to notify the advertisement server of the presence information that meets filtering rules preset by the advertisement server.

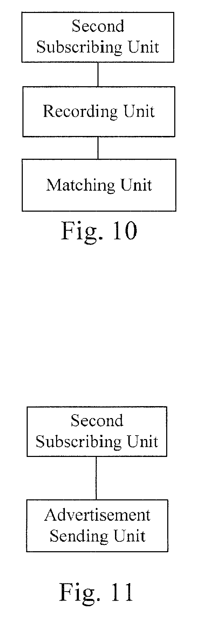

An advertisement server for disseminating advertisements by means of presence information is provided in the seventh embodiment of the present invention. The structure of the advertisement server is shown in Figure 11 and the advertisement server includes:

a second subscribing unit, adapted to enable an advertisement server to subscribe to the presence information of a presentity;

a matching unit, adapted to enable the advertisement server to match a presentity ID sent from a watcher to a presentity ID notified by a presence server, and record a result; and

a recording unit, adapted to record the presentity ID sent from the watcher to the advertisement server.

The advertisement server further includes:

a feedback message sending unit, adapted to enable the advertisement server to send a feedback message to the presentity and/or the presence server.

The advertisement server further includes:

an advertisement sending unit, adapted to enable the advertisement server to choose the advertisement that meets preset sending rules according to categorizing rules and the presence information and send the advertisement to the presentity.

An advertisement server for disseminating advertisements by means of presence information is provided in the eighth embodiment of the present invention. The structure of the advertisement server is shown in Figure 12 and the advertisement server includes:

a second subscribing unit, adapted to enable an advertisement server to subscribe to the presence information of a presentity; and

an advertisement sending unit, adapted to enable the advertisement server to choose the advertisement that meets preset sending rules according to categorizing rules and the presence information and send the advertisement to the presentity.

The systems and advertisement servers for disseminating advertisements by means of presence information illustrated in the fifth embodiment to the eighth embodiment of the present invention can be implemented with the forementioned technical schemes in the prior art, and therefore will not be described further here.

Apparently, those skilled in the art may make a variety of modifications and alternations to the present invention, without departing from the spirit and scope of the present invention. If such modifications or alternations fall into the scope defined in the claims or any equivalent technical scope, the present invention intends to cover them.

## Claims

1. A method for disseminating advertisements by presence information, comprising:
subscribing to, by a watcher, the presence information of a presentity;
publishing, by the presentity, the presence information with advertisement information and a presentity ID to a presence server;
notifying, by the presence server, the watcher of the presence information with the presentity ID;
sending, by the watcher, the presentity ID to an advertisement server; and
recording, by the advertisement server, the presentity ID.

2. The method according to claim 1, further comprising:
subscribing to, by the advertisement server, the presence information of the presentity;
between the step in which the presentity publishes the presence information with the advertisement information and presentity ID to the presence server and the step in which the presence server notifies the watcher of the presence information with the presentity ID, or, between the step in which the presence server notifies the watcher of the presence information with the presentity ID and the step in which the watcher sends the presentity ID to the advertisement server and the advertisement server records the identification ID,
notifying, by the presence server, the advertisement server of the presence information with the presentity ID; and
after the watcher sends the presentity ID to the advertisement server and the advertisement server records the presentity ID,
matching, by the advertisement serve, the presentity ID sent by the watcher to the presentity ID notified by the presence server, and recording a result.

3. The method according to claim 2, futher comprising: playing, by the watcher, advertisement content.

4. The method according to claim 3, futher comprising:
sending, by the advertisement server, a feedback message to the presentity and/or the presence server.

5. The method according to claim 2, further comprising:
playing, by the watcher, the advertisement content, and notifying the advertisement server of a message indicating that the watcher has played the advertisement.

6. The method according to claim 5, futher comprising:
sending, by the advertisement server, the feedback message to the presentity and/or the presence server.

7. The method according to claim 4 or 6, futher comprising:
sending, by the watcher, the presentity ID to the advertisement server, and obtaining the advertisement content from the advertisement server; recording, by the advertisement server, the presentity ID; and
sending, by the advertisment server, the feedback message to the presentity and/or the presence server when the advertisement server determines that the presentity ID sent by the watcher matches the presentity ID notified by the presence server completely and that it is the first time that the watcher obtains the advertisement content.

8. The method according to claim 7, further comprising:
publishing, by the presentity, the presence information to the presence server;
notifying, by the presence server, the advertisement server of the presence information that meets filtering rules preset by the advertisement server;
choosing, by the advertisement server, the advertisement that meets preset sending rules according to categorizing rules and the presence information, and
sending, via an SIP message, a message in which the advertisement content or advertisement URL is included, to the presentity, or
directly pushing the advertisement content to the presentity.

9. The method according to claim 2, further comprising:
publishing, by the presentity, the presence information to the presence server;
notifying, by the presence server, the advertisement server of the presence information that meets filtering rules preset by the advertisement server;
choosing, by the advertisement server, the advertisement that meets the preset sending rules according to categorizing rules and the presence information, and
sending, via an SIP message, a message in which the advertisement content or advertisement URL is included, to the presentity, or
directly pushing the advertisement content to the presentity.

10. A method for disseminating advertisements by means of presence information, comprising:
subscribing to, by an advertisement server, the presence information of a presentity;
publishing, by the presentity, the presence information to a presence server;
notifying, by the presence server, the advertisement server of the presence information that meets filtering rules preset by the advertisement server; and
choosing, by the advertisement server, the advertisement that meets preset sending rules according to categorizing rules and the presence information, and distributing the advertisement to the presentity.

11. The method according to claim 10, further comprising:
choosing, by the advertisement server, the advertisement that meets preset sending rules according to categorizing rules and the presence information, and
sending, via an SIP message, a message in which the advertisement content or advertisement URL is included, to the presentity, or
directly pushing, by the advertisement server, the advertisement content to the presentity.

12. A system for disseminating advertisements by means of presence information, comprising:
a first subscribing unit, which is arranged in a watcher, adapted to enable the watcher to subscribe to the presence information of a presentity;
a publishing unit, which is arranged in the presentity, adapted to enable the presentity to publish the presence information with advertisement information and a presentity ID to a presence server;
a notifying unit, which is arranged in the presence server, adapted to enable the presence server to notify the watcher of the presence information with the presentity ID;
a sending unit, which is arranged in the watcher, adapted to enable the watcher to send the presentity ID to an advertisement server; and
a recording unit, which is arranged in the advertisement server, adapted to record the presentity ID sent from the watcher to the advertisement server.

13. The system according to claim 12, further comprising:
a second subscribing unit, which is arranged in an advertisement server, adapted to enable the advertisement server to subscribe to the presence information of the presentity;
the notifying unit, further adapted to enable the presence server to notify the advertisement server of the presence information with the presentity ID; and
a matching unit, which is arranged in the advertisement server, adapted to enable the advertisement server to match a presentity ID sent from the watcher to a presentity ID notified by the presence server, and record a result.

14. The system according to claim 13, further comprising:
a playback unit, which is arranged in the watcher, adapted to play the advertisement content after the advertisement server matches the presentity ID sent from the watcher to the presentity ID notified by the presence server and records the result.

15. The system according to claim 13, further comprising:
a playback notifying unit, which is arranged in the watcher, adapted to play the advertisement content and notify the advertisement server of a message to indicate that the watcher has played the advertisement, between the step in which the watcher sends the presentity ID to the advertisement server and the advertisement server records the presentity ID and the step in which the advertisement server matches the presentity ID sent from the watcher to the presentity ID notified by the presence server and records the result.

16. The system according to claim 13, further comprising:
an advertisement sending unit, which is arranged in the advertisement server, adapted to enable the advertisement server to choose the advertisement that meets preset sending rules according to categorizing rules and the presence information and send the advertisement to the presentity;
the publishing unit, further adapted to enable the presentity to publish presence information to the presence server; and
the notifying unit, further adapted to enable the presence server to notify the advertisement server of the presence information that meets filtering rules preset by the advertisement server.

17. A system for disseminating advertisements by means of presence information, comprising:
a subscribing unit, which is arranged in an advertisement server, adapted to enable the advertisement server to subscribe to the presence information of a presentity;
an advertisement sending unit, which is arranged in the advertisement server, adapted to enable the advertisement server to choose the advertisement that meets preset sending rules according to categorizing rules and the presence information and send the advertisement to the presentity;
a publishing unit, which is arranged in the presentity, adapted to enable the presentity to publish the presence information to a presence server; and
a notifying unit, which is arranged in the presence server, adapted to enable the presence server to notify the advertisement server of the presence information that meets filtering rules preset by the advertisement server.

18. An advertisement server for disseminating advertisements by means of presence information, comprising:
a subscribing unit, adapted to enable an advertisement server to subscribe to the presence information of a presentity;
a matching unit, adapted to enable the advertisement server to match a presentity ID sent from a watcher to a presentity ID notified by a presence server, and record a result; and
a recording unit, adapted to record the presentity ID sent from the watcher to the advertisement server.

19. The advertisement server according to claim 18, further comprising:
an advertisement sending unit, adapted to enable the advertisement server to choose the advertisement that meets preset sending rules according to categorizing rules and the presence information and send the advertisement to the presentity.

20. An advertisement server for disseminating advertisements by means of presence information, comprising:
a subscribing unit, adapted to enable an advertisement server to subscribe to the presence information of a presentity; and
an advertisement sending unit, adapted to enable the advertisement server to choose the advertisement that meets preset sending rules according to categorizing rules and the presence information and send the advertisement to the presentity.
